# EUROPÄISCHE PATENTSCHRIFT

(11) **EP 1 113 855 B1**
(45) Veröffentlichungstag und Bekanntmachung des Hinweises auf die Patenterteilung: **05.01.2005**
(21) Anmeldenummer: 99939435.6
(22) Anmeldetag: 02.08.1999
(51) Int. Cl.: B01D 35/147, B01D 35/18

(54) **FILTER**
FILTER
FILTRE

(30) Priorität: 04.08.1998 DE 19835212
(43) Veröffentlichungstag der Anmeldung: 11.07.2001
(73) Patentinhaber: Mann + Hummel GmbH, 71638 Ludwigsburg (DE)
(72) Erfinder: MÜLLER, Heinz, D-71686 Remseck (DE); STORZ, Helmut, D-71726 Benningen (DE)
(74) Vertreter: Voth, Gerhard, Dipl.-Ing.
(86) Internationale Anmeldenummer: PCT/EP1999/005558
(87) Internationale Veröffentlichungsnummer: WO 2000/007693

(56) Entgegenhaltungen:
- US-A- 4 437 986
- US-A- 5 458 767
- PATENT ABSTRACTS OF JAPAN vol. 017, no. 490 (M-1474), 6. September 1993 (1993-09-06) & JP 05 118448 A (NGK INSULATORS LTD), 14. Mai 1993 (1993-05-14) in der Anmeldung erwähnt

## Beschreibung

Die Erfindung betrifft ein Filter, insbesondere ein Filter zur Reinigung des Schmieröls einer Brennkraftmaschine.

Das Schmieröl einer Brennkraftmaschine weist unter bestimmten Betriebsbedingungen Feuchtigkeit bzw. Wasser auf. Wasser bzw. Feuchtigkeit entsteht bei der Verbrennung des Kraftstoffluftgemisches und kann über die Durchblasgase in die Ölwanne gelangen. Dort wird es mit dem Öl über die Ölpumpe unter anderem zu dem Ölfilter geführt. Insbesondere unter ungünstigen klimatischen Bedingungen, daß heißt bei sehr tiefen Außentemperaturen kann dieses Wasser gefrieren und ein Filterelement bzw. ein Ventil kurzfristig verschließen. Dies führt dazu, daß der Motor bei einem Kaltstart nicht mit ausreichend Öl versorgt wird und dadurch zerstört werden kann.

Aus der DE 42 43 217 ist ein Flüssigkeitsfilter insbesondere Schmierölfilter bekannt. Dieses weist einen Filterkörper 13 auf, der ausgetauscht werden kann. Innerhalb der Filterkörpers sind zwei Ventile angeordnet. Es handelt sich dabei um ein Überdruckventil und ein Rückschlagventil. Solche Ventile bestehen üblicherweise aus einer Gummiventilplatte, die an einem metallischen Ventilteller anliegt. Diese Ventile sind äußerst zuverlässig, allerdings besteht die Gefahr, daß unter extremen Betriebsbedingungen insbesondere Tiefen Temperaturen Funktionsstörungen auftreten können.

Aus der JP 5/118 448 ist ein Multifunktionsfilter bekannt, bei dem eine hohe Korrosionsbeständigkeit und eine hohe Verschleißfestigkeit erzielt werden soll. Bei diesem Filter besteht ein Ventil aus Teflon, welches die beschriebenen Eigenschaften aufweisen soll.
Der Erfindung liegt die Aufgabe zugrunde ein Filter, insbesondere zur Reinigung des Schmieröls einer Brennkraftmaschine zu schaffen, dessen beweglichen Teile nicht nur verschleißfrei und korrosionsbeständig sind, sondern auch unter extremen Betriebsbedingungen zuverlässig funktionieren. Diese Aufgabe wird ausgehend von dem Oberbegriff des unabhängigen Anspruchs 1 durch dessen kennzeichnende Merkmale gelöst.

Ein Vorteil der Erfindung liegt darin, daß die Kontaktfläche zwischen Ventilteller und Anlagefläche eines in dem Filter angeordneten Ventils derart gestaltet wird, daß diese minimisiert ist. Durch diese Maßnahme wird das Ansprechenverhalten des Ventils, d.h. das leichte Öffnen und Schließen unter extremen Betriebsbedingungen gewährleistet. Es ist weiterin von Vorteil daß ein in dem Filter angeordnetes Ventil einen Ventilteller aufweist, der beispielsweise mit Teflon beschichtet ist. Außerdem kann die Anlagefläche des Ventils mit Teflon oder einem anderen wasserabweisenden Material beschichtet sein. Es besteht auch die Möglichkeit, den Ventilteller aus Silikon oder silikonbeschichtetem Material herzustellen. Bei Tiefen Umgebungstemperaturen, bei denen die Gefahr besteht, daß evtl. im Filter vorhandenes Wasser Eis bildet, verhindert die Beschichtung der Ventilteile ein Zusammenbacken von Ventilteller und Auflagefläche. Dies bedeutet, daß das Ventil auch unter sehr tiefen Temperaturen und Eisbildung beim Kaltstart des Motors sofort öffnet.

Gerade eine Beschichtung von Metallteilen mit einem hydrophoben Werkstoff, hat den Vorteil, daß einerseits die Stabilität des Ventils gewährleistet ist andererseits die Oberfläche dieses Bauteils sowohl korrosionsbeständig, verschleißarm als auch funktionssicher ist.

Alternativ oder ergänzend zu der besonderen Ausgestaltung eines Ventils besteht auch die Möglichkeit, ein Kaltleiterelement im Bereich des Ventils bzw. im Bereich des Filters anzuordnen. Dieses Kaltleiterelement oder auch eine evtl. Heizplatte, die mit der entsprechenden Spannung versorgt wird, führt zu einer raschen Erwärmung des Ventils und damit zu einem Auftauen evtl. vorhandener Eisschichten, so daß die Wirksamkeit des Ventils unmittelbar nach dem Start des Motors gegeben ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt
- Figur 1: ein Filter für das Schmieröl einer Brennkraftmaschine
- Figur 2: die Variante eines Filters.

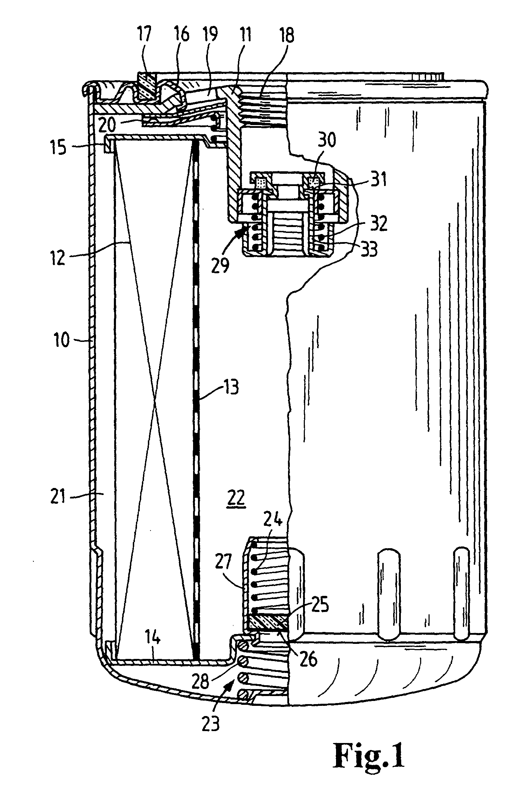

Das in Figur 1 dargestellte Filter besteht aus einem Gehäuse 10, einer Befestigungsplatte 11 und einem in dem Gehäuse 10 angeordnetem Filtereinsatz 12. Der Filtereinsatz ist ein zick-zack-förmig gefaltetes Filtermedium, das an einem Stützrohr 13 angeordnet ist und an den Stirnseiten Endscheiben 14, 15 aufweist.

Das Gehäuse 10 ist mit einem Deckel 16 verbörtelt. Dieser Deckel 16 trägt eine Dichtung 17. Die Befestigung des Filters erfolgt über eine Gewindeverbindung 18 an einer hier nicht dargestellten Trägerstruktur.

Das zu reinigende Öl strömt über die Öffnung 19 und ein Rücklaufsperrventil 20 in den Außenbereich des Filters durchströmt den Filtereinsatz12 und verläßt über einen zentralen Ablauf durch die Gewindeverbindung 18 gereinigt das Filter.

Zwischen der Rohölseite 21 und der Reinölseite 22 befindet sich ein Überdruckventil 23. Dieses besteht aus einer Ventilfeder 24, einer Ventilplatte 25, einer Anlagefläche 26 für die Ventilplatte und einer Federführung 27. Bei bestimmten Betriebszuständen, d. h. bei einem Kaltstart kann der Differenzdruck zwischen Rohölseite und Reinölseite so stark ansteigen, daß dieses Ventil öffnet und der Ölkreislauf aufrecht erhalten bleiben kann. Damit dieses Ventil zuverlässig öffnet, ist die Anlagefläche 26 beispielsweise teflonbeschichtet.

Die Ventilplatte 25 besteht unter Umständen aus Teflon und/oder ist ebenfalls eine teflonbeschichtete Metallplatte. Selbstverständlich besteht auch die Möglichkeit, eine andere Beschichtung vorzusehen. Wesentlich ist, daß diese Beschichtung hydrophob ist, so daß ein Vereisen von Wasser, das sich unter Umständen im Bereich dieses Ventils befindet, nicht zu einem Ausfall des Ventils führt.

Der Filtereinsatz 12 wird mit einer Druckfeder 28 in dem Gehäuse stabilisiert. In dem Filtereinsatz ist ferner ein Rückschlagventil oder Rücklaufsperrventil 29 vorgesehen. Dieses besteht ebenfalls aus einer Ventilplatte 30, einer Anlagefläche 31, einer Ventilfeder 32 und einer Federführung 33. Auch bei diesem Ventil sind die beweglichen Teile bzw. die Kontaktflächen dieser Teile mit Beschichtungen, insbesondere Teflonbeschichtungen oder Silikonbeschichtungen versehen, so daß die Funktionsfähigkeit auch bei Eisbildung gewährleistet ist.

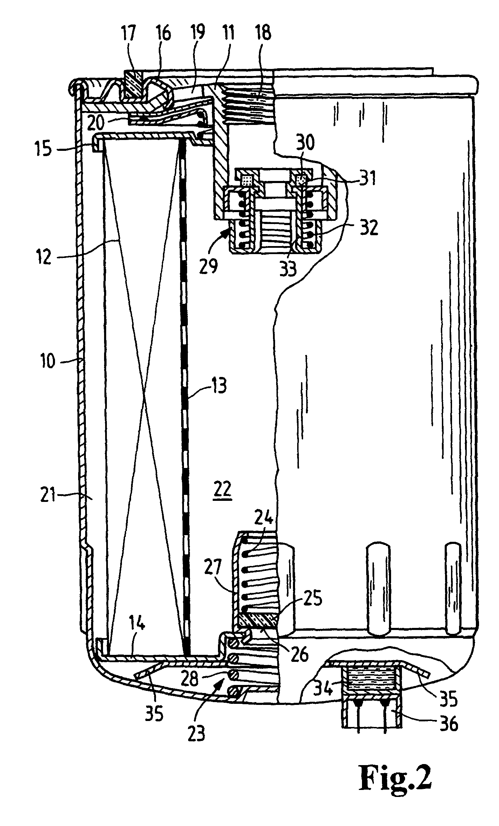

Figur 2 zeigt in einer schematischen Darstellung ein Filter (gleiche Teile sind mit gleichen Bezugszeichen versehen). Dieses Filter weist zusätzlich ein Heizelement 34 auf. Dieses Heizelement ist an einer Metallscheibe, beispielsweise an einer Kupferscheibe 35 befestigt. Das Heizelement 34 wird über Steckverbinder 36 mit Spannung versorgt. Als Heizelement eignet sich eine Heizplatte oder auch ein Kaltleiter, der unterhalb einer bestimmten Grenztemperatur eine Aufheizung der in dem Filter befindlichen Flüssigkeit vornimmt.

## Patentansprüche

1. Filter, insbesondere für Schmieröl einer Brennkraftmaschine mit einer Zuflußöffnung für die Rohflüssigkeit, einer Abflußöffnung für die Reinflüssigkeit, einem Filtereinsatz (12) und einem Überdruckventil (23), **dadurch gekennzeichnet, dass** Teile des Überdruckventils mit Teflonbeschichtung oder Silikonbeschichtung versehen sind und/oder ein Heizelement (34) im Bereich des Überdruckventils vorgesehen ist und dass die Anlagefläche (26) des überdruckventils bezogen auf die entsprechende Ventilplatte (25) einen näherungsweise linienförmigen Kontaktbereich ausweist.

2. Filter nach Anspruch 1, **dadurch gekennzeichnet, daß** die Teile des Überdruckventils hydrophobbeschichtet sind.

3. Filter nach einem der vorigen Ansprüche, **dadurch gekennzeichnet, daß** ein Rücklaufsperrventil (29) vorgesehen ist, welches mit hydrophoben Beschichtungen versehen ist.

4. Filter nach einem der vorigen Ansprüche, **dadurch gekennzeichnet, daß** die Anlagefläche (31) des Rücklaufsperrventils (29) bezogen auf die entsprechende Ventilplatte (30) eine näherungsweise linienförmige Kontaktbereich aufweist.

5. Filter nach Anspruch 1, **dadurch gekennzeichnet, daß** das Heizelement ein Kaltleiter ist.

6. Filter nach Anspruch 1, **dadurch gekennzeichnet, daß** das Heizelement eine Heizplatte ist, welche über einen Temperatursensor angesteuert wird.

7. Filter nach einem der vorigen Ansprüche, **dadurch gekennzeichnet, daß** die Ventilplatte oder die Anlagefläche des entsprechenden Ventils ein Kaltleiter oder ein Heizelement ist.

## Claims

1. Filter, more especially for the lubricating oil of an internal combustion engine, said filter having an inlet opening for the unfiltered liquid, an outlet opening for the filtered liquid, a filter insert (12) and a pressure-relief valve (23), **characterised in that** parts of the pressure relief valve are provided with Teflon coating or silicone coating and/or a heating element (34) is provided in the region of the pressure relief valve, and **in that** the contact face (26) of the pressure relief valve, with reference to the corresponding valve plate (25), includes an approximately linear-shaped contact region.

2. Filter according to claim 1, **characterised in that** the parts of the pressure relief valve are provided with a water repellent coating.

3. Filter according to one of the preceding claims, **characterised in that** there is provided a non-return valve (29), which is provided with a water repellent coating.

4. Fitter according to one of the preceding claims, **characterised in that** the contact face (31) of the non-return valve (29), with reference to the corresponding valve plate (30), includes an approximately linear-shaped contact region.

5. Filter according to claim 1, **characterised in that** the heating element is a positive temperature coefficient thermistor (PTC thermistor).

6. Filter according to claim 1, **characterised in that** the heating element is a heating plate, which is activated via a temperature sensor.

7. Filter according to one of the preceding claims, **characterised in that** the valve plate or the contact face of the corresponding valve is a PTC thermistor or a heating element.

## Revendications

1. Filtre, notamment pour le lubrifiant d'un moteur à combustion interne, doté d'un orifice d'entrée pour le liquide brut, d'un orifice de sortie pour le liquide propre, d'une cartouche filtrante (12) et d'une soupape de surpression (23),
**caractérisé en ce que**
les pièces de la soupape de surpression sont dotées d'un revêtement en téflon ou en silicone et/ou un élément de chauffage (34) est prévu dans la zone de la soupape de surpression, et la face de pose de la soupape de surpression présente une zone de contact approximativement linéaire par rapport à la plaque de soupape (25) correspondante.

2. Filtre selon la revendication 1,
**caractérisé en ce que**
les pièces de la soupape de surpression sont recouvertes d'une matière hydrophobe.

3. Filtre selon l'une quelconque des revendications précédentes,
**caractérisé en ce qu'**
il est prévu un clapet anti-retour (29) doté de revêtements hydrophobes.

4. Filtre selon l'une quelconque des revendications précédentes,
**caractérisé en ce que**
la face de pose (31) du clapet anti-retour (29) présente une zone de contact approximativement linéaire par rapport à la plaque de soupape (30) correspondante.

5. Filtre selon la revendication 1,
**caractérisé en ce que**
l'élément de chauffage est un posistor.

6. Filtre selon la revendication 1,
**caractérisé en ce que**
l'élément de chauffage est une plaque chauffante commandée par un capteur de température.

7. Filtre selon l'une quelconque des revendications précédentes,
**caractérisé en ce que**
la plaque de soupape ou la face de pose de la soupape correspondante est un posistor ou un élément de chauffage.
